# EUROPÄISCHE PATENTANMELDUNG

(11) **EP 3 608 010 A1**
(43) Veröffentlichungstag der Anmeldung: **12.02.2020**
(21) Anmeldenummer: 18400025.5
(22) Anmeldetag: 07.08.2018
(51) Int. Cl.: B01D 53/14, C01B 17/04, C10K 1/00

(54) **VERFAHREN UND VORRICHTUNG ZUR ABTRENNUNG SAURER GASBESTANDTEILE AUS EINEM GASGEMISCH**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60486 Frankfurt am Main (DE); Gubrinski, Alfred, 64390 Erzhausen (DE)
(74) Vertreter: Stang, Stefan

(57) **Zusammenfassung**

Die Erfindung betrifft ein Verfahren zur Abtrennung von sauren Gasbestandteilen aus einem Gasgemisch, durch Gaswäsche mit einem physikalisch wirkenden Waschmittel, bei dem ein aus mindestens einer Regenerationsstufe des physikalisch wirkenden Waschmittels abgezogenes Recycle-Gas einem Verdichter zugeführt wird, wodurch ein erwärmtes verdichtetes Recycle-Gas erhalten wird. Erfindungsgemäß ist vorgesehen, dass ein aus einer Waschkolonne abgezogenes, mit sauren Gasbestandteilen beladenes Waschmittel in indirekten Kontakt mit dem erwärmten verdichteten Recycle-Gas gebracht wird, wobei eine Übertragung von Wärme von dem erwärmten verdichteten Recycle-Gas auf das beladene Waschmittel stattfindet, wodurch das erwärmte verdichtete Recycle-Gas abgekühlt wird und das beladene Waschmittel erwärmt wird, wodurch ein abgekühltes verdichtetes Recycle-Gas und ein erwärmtes beladenes Waschmittel erhalten werden. Die Erfindung betrifft auch eine Vorrichtung zur Durchführung des erfindungsgemäßen Verfahrens und eine Verwendung des erfindungsgemäßen Verfahrens oder der Vorrichtung in einem Gaswäscheverfahren mit Methanol als Waschmittel.

## Beschreibung

### Gebiet der Erfindung

Die Erfindung betrifft ein Verfahren zur Abtrennung von sauren Gasbestandteilen aus einem Gasgemisch, beispielsweise Kohlendioxid oder Schwefelwasserstoff, durch Gaswäsche mit einem physikalisch wirkenden Waschmittel. Die Erfindung betrifft auch eine Vorrichtung zur Abtrennung von sauren Gasbestandteilen aus einem Gasgemisch durch Gaswäsche mit einem physikalisch wirkenden Waschmittel und die Verwendung des Verfahrens oder der Vorrichtung in einem Gaswäscheverfahren mit Methanol als Waschmittel.

### Stand der Technik

Verfahren zur Abtrennung von unerwünschten Begleitstoffen aus technischen Rohgasen mittels physikalischer Absorption unter Verwendung flüssiger Absorbentien, auch als Gaswäsche bezeichnet, sind aus dem Stand der Technik bekannt. So können mit solchen Verfahren unerwünschte, saure Gasbestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS) und Cyanwasserstoff (HCN), von den erwünschten Synthesegasbestandteilen Wasserstoff (H₂) und Kohlenmonoxid (CO) entfernt werden. Als bekannte physikalisch wirkende Waschmittel kommen beispielsweise Methanol, 1-Methyl-2-pyrrolidon (NMP), Mischungen von Dimethylethern von Polyethylenglycol, sowie Propylencarbonat (4-Methyl-1,3-dioxolan-2-on) zum Einsatz.

Die Aufnahme der unerwünschten sauren Gasbestandteile erfolgt im Falle physikalisch wirkender Waschmittel regelmäßig durch kalte, unter Umgebungstemperatur abgekühlte Waschmittel als Absorbens. Dabei erfolgt in einer Absorptionskolonne, auch als Waschkolonne bezeichnet, ein intensiver Stoffaustausch zwischen dem Rohgas und dem Waschmittel. Die Löslichkeit der unerwünschten sauren Gasbestandteile erhöht sich dabei drastisch mit sinkender Temperatur und zunehmendem Druck, während sie für erwünschte Bestandteile wie Wasserstoff und Kohlenmonoxid weitgehend konstant bleibt. Insbesondere Methanol hat den zusätzlichen Vorteil, selbst bei Temperaturen bis hinab zu -75°C noch eine geringe Viskosität und somit gute Stofftransporteigenschaften aufzuweisen.

Das mit den sauren Gasbestandteilen beladene Waschmittel wird über Regenerierungsvorrichtungen in einem Kreislauf gefahren. Dabei kann die Regenerierung durch Druckentspannung (sogenannte Flashregenerierung oder Flashen), durch Strippen mit einem Stripp-Gas, beispielsweise Stickstoff, oder durch Strippen mit Eigendampf, auch als Heißregenerierung bezeichnet, erfolgen.

Die bei der Regenerierung erhaltenen Gase enthalten neben unerwünschten sauren Gasbestandteilen regelmäßig Wertgase wie Kohlenmonoxid (CO) oder Wasserstoff (H₂) als weitere Bestandteile. Aus diesem Grund werden die bei der Regenerierung des Waschmittels erhaltenen Gase als sogenannte Recycle-Gase behandelt und zur Waschkolonne zurückgeführt. Dabei werden die Recycle-Gase mit dem Rohgas-Strom zusammengeführt und der Waschkolonne zur erneuten Absorption zugeführt. Da die Waschkolonne bei hohen Drücken von bis zu 100 bar betrieben wird und die bei der Regenerierung anfallenden Gase einen signifikant niedrigeren Druck aufweisen, müssen die Recycle-Gase vor dem Zurückführen zur Waschkolonne auf höhere Drücke verdichtet (komprimiert) werden. Die dabei entstehende Verdichtungswärme (Kompressionswärme) wird den Recycle-Gasen entzogen, bevor diese zur Waschkolonne zurückgeführt werden. Da die Löslichkeit der unerwünschten sauren Gasbestandteile mit sinkender Temperatur des Waschmittels steigt, ist vor Zuführen der Recycle-Gase zur Waschkolonne dafür Sorge zu tragen, dass das Waschmittel durch das zugeführte Recycle-Gas nicht ungewollt erwärmt wird.

In bekannten Verfahren wird die Kompressionswärme des verdichteten Recycle-Gases durch eine aktive separate Kühlung, beispielsweise durch Kühlwasser, abgeführt. Dafür müssen gesonderte Betriebsmittel und Energie zum Kühlen aufgewendet werden, was erhöhte Betriebskosten zur Folge hat.

So offenbart beispielsweise US 8,845,788 B2 ein Verfahren zur Behandlung eines Schwefelwasserstoff (H₂S) und Kohlendioxid (CO₂) haltigen Synthesegas-Stroms, bei dem ein durch Druckentspannung erhaltenes Recycle-Gas verdichtet und anschließend durch einen Kühler gekühlt wird, bevor es als Recycle-Strom zur Waschkolonne zurückgeführt werden kann.

### Beschreibung der Erfindung

Eine Aufgabe der Erfindung kann darin gesehen werden, die Nachteile des Standes der Technik zumindest teilweise zu überwinden.

Eine weitere Aufgabe der Erfindung kann darin gesehen werden, bei der Kühlung der verdichteten Recycle-Gases Energie einzusparen.

Eine weitere Aufgabe der Erfindung kann darin gesehen werden, bei der Kühlung der verdichteten Recycle-Gase Betriebsmittel, insbesondere gesonderte Vorrichtungen zur Kühlung der verdichteten Recycle-Gase, einzusparen.

Allgemein kann als eine Aufgabe der Erfindung betrachtet werden, ein Gaswäscheverfahren insbesondere in Bezug auf die Rückführung verdichteter Recycle-Gase zur Waschkolonne effektiver und/oder wirtschaftlicher zu gestalten.

Die Aufgabe der Erfindung wird gelöst durch ein Verfahren zur Abtrennung von sauren Gasbestandteilen aus einem Gasgemisch, durch Gaswäsche mit einem physikalisch wirkenden Waschmittel, bei dem ein aus mindestens einer Regenerationsstufe des physikalisch wirkenden Waschmittels abgezogenes Recycle-Gas einem Verdichter zugeführt wird, wodurch ein erwärmtes verdichtetes Recycle-Gas erhalten wird. Erfindungsgemäß ist vorgesehen, dass ein aus einer Waschkolonne abgezogenes, mit sauren Gasbestandteilen beladenes Waschmittel in indirekten Kontakt mit dem erwärmten verdichteten Recycle-Gas gebracht wird, wobei eine Übertragung von Wärme von dem erwärmten verdichteten Recycle-Gas auf das beladene Waschmittel stattfindet, wodurch das erwärmte verdichtete Recycle-Gas abgekühlt wird und das beladene Waschmittel erwärmt wird, wodurch ein abgekühltes verdichtetes Recycle-Gas und ein erwärmtes beladenes Waschmittel erhalten werden.

Wird oben oder im Folgenden ein beladenes Waschmittel" erwähnt, so ist darunter ein Waschmittel zu verstehen, das zumindest mit einem sauren Gasbestandteil beladen ist. Das beladene Waschmittel kann mit weiteren Bestandteilen beladen sein.

Unter den Begriffen "verdichtet" und "komprimiert" ist oben und im Folgenden dasselbe zu verstehen.

Unter "Recycle-Gas" wird ein Gas oder Gasgemisch verstanden, das bei einer oder mehreren. Regenerationsstufen des Gaswäsche-Verfahrens erhalten wird, wobei das Recycle-Gas sowohl unerwünschte saure Gasbestandteile als auch Wertgase wie beispielsweise Kohlenmonoxid (CO) oder Wasserstoff (H₂) enthalten kann. Die Wertgase sind zur Waschkolonne zurückzuführen, sind also zu "recyceln". In der Regel wird der Recycle-Gas-Strom vor Zuführung zur Waschkolonne mit einem Rohgas-Strom zusammengeführt.

Unter "saurem Gasbestandteil" wird ein in Lösung, insbesondere wässriger Lösung sauer reagierender Gasbestandteil verstanden. Beispiele für solche Gasbestandteile sind Kohlendioxid (CO₂), Schwefelwasserstoff (H₂S) und Cyanwasserstoff (HCN).

Unter "physikalisch wirkendem Waschmittel" wird ein Waschmittel verstanden, bei dem die Löslichkeit des betreffenden Gases im Waschmittel durch physikalische Wechselwirkungen bewirkt wird. Im Gegensatz zu den aus dem Stand der Technik bekannten Verfahren hat das erfindungsgemäße Verfahren den Vorteil, dass das aus der Waschkolonne abgezogene, mit Gasen beladene Waschmittel dafür verwendet wird, die durch Verdichtung erwärmten Recycle-Gase zu kühlen. Auf einen separaten mit Kühlwasser oder einer Kühl-Sole zu betreibenden Kühler kann dadurch zumindest teilweise, in einer bevorzugten Ausgestaltung auch vollständig, verzichtet werden. Dies führt zur Einsparung von Betriebsmitteln und Energie. Das betreffende Verfahren ist dadurch sowohl technisch als auch betriebswirtschaftlich effizienter als bekannte Verfahren.

Je nachdem, aus welchem Bereich einer Waschkolonne das beladene Waschmittel abgezogen wird, ist dieses gegebenenfalls nur schwach mit Gasen beladen, d.h. es sind Gase nicht bis zur Sättigung gelöst. Die bei der Beladung auftretende Absorptionswärme ist dann vernachlässigbar, so dass ein ausreichend kaltes, beladenes Waschmittel zur Kühlung des erwärmten verdichteten Recycle-Gases zur Verfügung steht.

Als Beispiel sei das bekannte Rectisol-Verfahren genannt. Beim Rectisol-Verfahren wird Methanol als Waschmittel bei Temperaturen von bis herunter zu -75 °C verwendet. Selbst bei sehr hohen Beladungen und entsprechend auftretenden Absorptionswärmen wird dieses Waschmittel üblicherweise auf nicht mehr als 0 °C erwärmt, so dass in jedem Fall ein beladenes Waschmittel zur Verfügung steht, das effektiv zur Kühlung der erwärmten komprimierten Gase genutzt werden kann.

Im erfindungsgemäßen Verfahren nutzt man somit die Tatsache aus, dass ein im Vergleich zur Umgebungstemperatur signifikant gekühltes Waschmittel zur Absorption der sauren Gasbestandteile aus dem Gasgemisch genutzt wird. Durch die Absorption der sauren Gasbestandteile und gegebenenfalls weiterer Gasbestanteile treten dabei Absorptionswärmen auf, die nur so hoch sind, das das beladene Waschmittel nichtsdestotrotz effektiv zur Kühlung der erwärmten komprimierten Recycle-Gase genutzt werden kann.

Das mit sauren Gasbestandteilen beladene Waschmittel wird dabei in indirekten Kontakt mit dem erwärmten verdichteten Recycle-Gas gebracht. Unter "indirekter Kontakt" wird dabei verstanden, dass das beladene Waschmittel nicht direkt (nicht unmittelbar) mit dem Recycle-Gas in Kontakt gebracht wird. Das beladene Waschmittel und das Recycle-Gas können sich somit nicht vermischen. Eine direkte Wärmeübertragung vom erwärmten komprimierten Recycle-Gas auf das beladene Waschmittel ist nicht vorgesehen. Vielmehr findet die Wärmeübertragung vom erwärmten komprimierten Recycle-Gas auf das beladene Waschmittel durch eine mindestens einschichtige wärmedurchlässige Wand statt. Das Prinzip dieser indirekten Wärmeübertragung wird beispielsweise in indirekten Wärmetauschern, auch als Wärmeübertrager oder Wärmeaustauscher bezeichnet, realisiert.

In einem Beispiel wird das erwärmte verdichtete Recycle-Gas um bis zu 50 °C abgekühlt, wobei das abgekühlte verdichtete Recycle-Gas erhalten wird. In einem Beispiel wird das erwärmte verdichtete Recycle-Gas um bis zu 75 °C abgekühlt, oder um bis zu 100 °C, oder 150 °C, oder 200 °C. In einem Beispiel wird das erwärmte verdichtete Recycle-Gas um wenigstens 5 °C abgekühlt.

In einem Beispiel wird das beladene Waschmittel um bis zu 50 °C erwärmt, wobei das erwärmte beladene Waschmittel erhalten wird. In einem Beispiel wird das beladene Waschmittel um bis zu 75 °C erwärmt, oder 100 °C, oder 150 °C, oder 200 °C. In einem Beispiel wird das beladene Waschmittel um wenigstens 5 °C erwärmt.

In einem Beispiel wird das erwärmte komprimierte Recycle-Gas von 160 °C auf -20 °C abgekühlt, insbesondere von 100 bis 120 °C auf 40 °C.

In einem Beispiel wird das Waschmittel, insbesondere Methanol, von -30 °C auf 80 °C erwärmt. Dabei wird Methanol durch das erwärmte komprimierte Recycle-Gas so weit aufgeheizt, dass es im Anschluss mit nur wenig zusätzlicher Heizleistung einer Heißregenerierung zugeführt werden kann.

### Bevorzugte Ausgestaltungen der Erfindung

Eine bevorzugte Ausführungsform des erfindungsgemäßen Verfahrens ist dadurch gekennzeichnet, dass das erwärmte beladene Waschmittel einer Heißregenerierung zugeführt wird, wobei bei der Heißregenerierung ein H₂S-haltiges Abgas und ein heißregeneriertes Waschmittel erhalten werden.

Die Heißregenerierung des beladenen Waschmittels kann auch als Strippen mit Eigendampf, beispielsweise Methanol-Dampf im Falle von Methanol als Waschmittel, oder als "Auskochen" betrachtet werden. Dabei werden die sauren Gasbestandteile, insbesondere Schwefelwasserstoff (H₂S), wieder aus dem erwärmten beladenen Waschmittel freigesetzt. In Fällen, in denen nur wenige Wertgase im Waschmittel co-absorbiert wurden, ist es von Vorteil das erwärmte beladene Waschmittel unmittelbar einer Heißregenerierung zuzuführen, ohne dass weitere Zwischenstufen (zum Beispiel eine Entspannungsregenerierung) erforderlich sind.

In einem Beispiel wird das bei der Heißregenerierung erhaltene H₂S-haltige Abgas, das auch Dämpfe des heißregenerierten Waschmittels enthält, einer weiteren Verarbeitung zugeführt. In einem Beispiel werden die Dämpfe des Waschmittels auskondensiert. Das H₂S-haltige Abgas kann anschließend einer Claus-Anlage zur Herstellung von Schwefel zugeführt werden.

Eine bevorzugte Ausführungsform des erfindungsgemäßen Verfahrens ist dadurch gekennzeichnet, dass das erwärmte beladene Waschmittel einer Entspannungsregenerierung zugeführt wird, wobei durch die Entspannungsregenerierung ein entspannungsregeneriertes Waschmittel und ein Entspannungsgas erhalten werden, wobei das Entspannungsgas dem Verdichter zugeführt wird und das entspannungsregenerierte Waschmittel einer Heißregenerierung zugeführt wird, wobei bei der Heißregenerierung ein H₂S-haltiges Abgas und ein heißregeneriertes Waschmittel erhalten werden.

Unter "Entspannungsregenerierung" wird dabei eine Druckentspannung, also Senken des Drucks zur Desorption gelöster Gase, verstanden. Alternative Bezeichnungen sind Flash-Regenerierung oder kurz "Flashen". Die Entspannungsregenerierung kann beispielsweise in einer sogenannten Flash-Kolonne durchgeführt werden.

Das erwärmte beladene Waschmittel kann anstatt direkt einer Heißregenerierung zugeführt zu werden, oder als Alternative dazu, zunächst einer Entspannungsregenerierung zugeführt werden. Die bei der Entspannungsregenerierung erhaltenen Entspannungsgase werden anschließend dem Verdichter zugeführt und nach Kühlen der erwärmten verdichteten Recycle-Gase zur Waschkolonne zwecks Absorption zurückgeführt. Der aus der Druckentspannungs-Kolonne abgezogene Flüssigkeitsstrom kann anschließend einer Heißregenerierung zugeführt werden. Es hat sich vor allem dann als vorteilhaft erwiesen das erwärmte beladene Waschmittel zunächst einer Entspannungsregenerierung zuzuführen, wenn das Entspannungsgas - in Abhängigkeit von der Zusammensetzung des Rohgases - einen hohen Anteil an Wertgasen aufweist.

Eine bevorzugte Ausführungsform des erfindungsgemäßen Verfahrens ist dadurch gekennzeichnet, dass das beladene Waschmittel ausschließlich durch das erwärmte verdichtete Recycle-Gas erwärmt wird.

In Abhängigkeit von der Temperatur des aus der Waschkolonne abgezogenen Waschmittels und der bei der Verdichtung der Recycle-Gase auftretenden Kompressionswärme kann gegebenenfalls auf eine zusätzliche Heizquelle zum Heizen des beladenen Waschmittels verzichtet werden. Dies führt in vorteilhafter Weise zu einer weiteren Einsparung von Betriebsmitteln und einem weiter verringerten technischen Aufwand.

Eine bevorzugte Ausführungsform des erfindungsgemäßen Verfahrens ist dadurch gekennzeichnet, dass das beladene Waschmittel durch das erwärmte verdichtete Recycle-Gas erwärmt wird und durch das H₂S-haltige Abgas erwärmt wird.

In Fällen, in denen die bei der Verdichtung der Recycle-Gase auftretende Kompressionswärme nicht zur vollständigen Erwärmung des beladenen Waschmittels ausreicht, kann das beladene Waschmittel zusätzlich durch das bei der Heißregenerierung des beladenen Waschmittels erhaltene Abgas aufgewärmt werden, bevor es selbst der Heißregenerierung zugeführt wird. Das bei der Heißregenerierung auftretende Abgas weist in einem Beispiel zumindest Schwefelwasserstoff (H₂S) als unter den Bedingungen des Verfahrens nicht kondensierbare Komponente auf. In einem alternativen Beispiel weist das Abgas stattdessen oder in einem weiteren Beispiel zusätzlich Kohlendioxid (CO₂) als unter den Bedingungen des Verfahrens nicht kondensierbare Komponente auf. In einem weiteren Beispiel weist das Abgas bei der Heißregenerierung entstehendes dampfförmiges Waschmittel als unter den Bedingungen des Verfahrens kondensierbare Komponente auf. In einem Beispiel handelt es sich bei dem dampfförmigen und unter den Bedingungen des Verfahrens kondensierbaren Waschmittel um Methanol.

In Fällen, in denen die durch die Verdichtung der Recycle-Gase auftretende Kompressionswärme nicht zum verständigen Aufheizen des beladenen Waschmittels ausreicht, insbesondere bevor dieses einer Heißregenerierung zugeführt wird, wird das beladene Waschmittel zusätzlich durch das bei der Heißregenerierung erhaltene Abgas erwärmt. Die Kombination aus Kompressionswärme und Heizen mit Hilfe des Abgases erlaubt dabei zusätzlich eine bessere Steuerung und Regelung des Aufheizvorgangs.

Eine bevorzugte Ausführungsform des erfindungsgemäßen Verfahrens ist dadurch gekennzeichnet, dass das beladene Waschmittel einer Entspannungsregenerierung zugeführt wird, bevor es in indirekten Kontakt mit dem erwärmten und verdichteten Recycle-Gas gebracht wird.

Gemäß dieser Ausführungsform wird das aus der Waschkolonne abgezogene, beladene Waschmittel nicht unmittelbar zum Kühlen der erwärmten verdichteten Recycle-Gase verwendet, sondern im Rahmen einer Entspannungsregenerierung zunächst teilweise regeneriert. Die dabei erhaltenen Entspannungsgase werden einem Verdichter zugeführt. Das teilregenerierte Waschmittel wird anschließend zum Kühlen erwärmter verdichteter Recycle-Gase verwendet. Da teilregeneriertes Waschmittel gegenüber "vollständig" beladenem Waschmittel durch die teilweise Desorption der Gase eine signifikant niedrigere Temperatur aufweist, kann dieses Waschmittel noch effektiver zum Kühlen erwärmter verdichteter Recycle-Gase eingesetzt werden.

Eine bevorzugte Ausführungsform des erfindungsgemäßen Verfahrens ist dadurch gekennzeichnet, dass die Übertragung der Wärme vom erwärmten verdichteten Recycle-Gas auf das beladene Waschmittel stromabwärts des Verdichters stattfindet.

Die größten Abwärmen bei der Verdichtung der Recycle-Gase treten in der Regel am Auslass des Verdichters auf, so dass es von Vorteil ist, wenn die Übertragung der Wärme vom erwärmten verdichteten Recycle-Gases auf das beladene Waschmittel stromabwärts des Verdichters stattfindet. In einer besonders bevorzugten Ausführungsform findet die Übertragung der Wärme in unmittelbarer Nähe zum oder direkt am Auslass des Verdichters statt. Weiter bevorzugt wird der Verdichter selbst, im Falle eines Kolbenverdichters insbesondere die Zylinderräume des Verdichters, durch Übertragung von dort anfallender Wärme auf das beladene Waschmittel gekühlt.

Als Verdichter zum Komprimieren der Recycle-Gase kommen dem Fachmann bekannte Verdichter wie Hubkolbenverdichter, Rotationskolbenverdichter und Turboverdichter in Frage. Hubkolbenverdichter werden besonders dann bevorzugt, wenn eine mehrstufige Verdichtung der Recycle-Gase erforderlich ist.

Eine bevorzugte Ausführungsform des erfindungsgemäßen Verfahrens ist dadurch gekennzeichnet, dass der Verdichter mehrere hintereinander angeordnete Verdichtungsstufen aufweist.

Das Recycle-Gas ist regelmäßig auf den gleichen Druck zu verdichten, den auch der Rohgas-Strom aufweist, dem das üblicherweise zugeführt wird. Werden mehrere Verdichter hintereinander anstatt eines einzigen Verdichters verwendet, ist das Verdichtungsverhältnis pro Druckstufe kleiner als bei Verwendung eines einzigen Verdichters. Unter Verdichtungsverhältnis wird dabei das Druckverhältnis zwischen dem Verdichter zugeführten Frischgas und dem den Verdichter verlassenden Druckgases verstanden. Bei Hubkolbenverdichtem werden zudem mit ansteigendem Druck, bezogen auf den Druck einer Verdichtungsstufe, kleinere Zylinder benötigt, da das Volumen des verdichteten Gases mit steigendem Druck von Druckstufe zu Druckstufe kleiner wird. Dies führt im Vergleich zu einstufiger Verdichtung insgesamt zu Einsparungen von elektrischer Leistung zum Betreiben der Verdichter.

Eine bevorzugte Ausführungsform des erfindungsgemäßen Verfahrens ist dadurch gekennzeichnet, dass die Übertragung der Wärme vom erwärmten verdichteten Recycle-Gas auf das beladene Waschmittel zwischen zwei der Verdichtungsstufen stattfindet.

Das Recycle-Gas wird vorzugsweise nach jeder Verdichtungsstufe durch das beladene Waschmittel zwischengekühlt, bevor es in die nächste Verdichtungsstufe eintritt. Vorzugsweise wird das Recycle-Gas jeweils auf diejenige Ausgangstemperatur zwischengekühlt, mit der es in die vorherige Verdichtungsstufe eingetreten ist.

Eine bevorzugte Ausführungsform des erfindungsgemäßen Verfahrens ist dadurch gekennzeichnet, dass die Übertragung der Wärme in einem Wärmetauscher stattfindet.

Vorzugsweise ist der Wärmetauscher stromabwärts des Verdichters angeordnet, besonders bevorzugt in unmittelbarer Nähe zum oder direkt am Auslass des Verdichters.

Als Wärmetauscher kommen sämtliche dem Fachmann bekannte und geeignete Typen für indirekte Wärmetauscher in Frage. Beispiele sind Rohrbündel-Wärmetauscher, Rohrschlangen-Wärmetauscher, Doppelrohr-Wärmetauscher, Spiral-Wärmetauscher und Platten-Wärmetauscher, wobei Rohrbündel-Wärmetauscher bevorzugt sind.

Eine bevorzugte Ausführungsform des erfindungsgemäßen Verfahrens ist dadurch gekennzeichnet, dass die mindestens eine Regenerationsstufe ausgewählt ist aus der Gruppe aufweisend Entspannungsregenerierung (flashen), Strippen und Heißregenerierung. Dabei ist Strippen bevorzugt und Entspannungsgenerierung (Druckentspannung) besonders bevorzugt.

Die Regenerierung eines beladenen Waschmittels durch Druckentspannung ist die einfachste Methode, um beladene Gase aus dem Waschmittel freizusetzen. Die so erhaltenen Recycle-Gase können direkt dem Verdichter zugeführt werden.

Eine bevorzugte Ausführungsform des erfindungsgemäßen Verfahrens ist somit dadurch gekennzeichnet, dass die mindestens eine Regenerationsstufe eine Entspannungsregenerierung (flashen) umfasst, wobei die Entspannungsregenerierung ausgewählt ist aus der Gruppe umfassend Hochdruck-, Mitteldruck- und Niederdruck-Entspannungsregenerierung.

Das Rohsynthesegas tritt üblicherweise mit Drücken zwischen 20 bis 100 bar in die Waschkolonne ein. In einem Beispiel für eine Hochdruck-Entspannungsregenerierung wird der Druck auf 20-70 bar abgesenkt. In einem Beispiel für eine Mitteldruck-Entspannungsregenerierung wird der Druck auf 15-40 bar abgesenkt. In einem Beispiel für eine Niederdruck-Entspannungsregenerierung wird der Druck auf 1,5 bis 15 bar abgesenkt.

Eine bevorzugte Ausführungsform des erfindungsgemäßen Verfahrens ist dadurch gekennzeichnet, dass das Waschmittel ausgewählt ist aus wenigstens einem Element der Gruppe umfassend Methanol, 1-Methyl-2-pyrrolidon (NMP), eine Mischung von Dimethylethern von Polyethylenglycol, und Propylencarbonat (4-Methyl-1,3-dioxolan-2-on). Vorzugsweise wird als Waschmittel im Wesentlichen reines oder reines Methanol oder eine Methanol-haltige Lösung verwendet. In einem Beispiel weist die Methanol-haltige Lösung einen Methanol-Gehalt von wenigstens 80 Vol.-% auf, oder wenigstens 90 Vol.-%, oder wenigstens 99 Vol.-%, oder wenigstens 99,5 Vol.-%.

Eine bevorzugte Ausführungsform des erfindungsgemäßen Verfahrens ist dadurch gekennzeichnet, dass das Gasgemisch ein Synthesegas umfasst, wobei das Synthesegas als Bestandteile Wasserstoff (H₂), Kohlenmonoxid (CO), Kohlendioxid (CO₂), Schwefelwasserstoff (H₂S) und optional wenigstens ein Element aus der Gruppe aufweisend Carbonylsulfid (COS), Cyanwasserstoff (HCN), und Thiole (Mercaptane) umfasst. Optional weist das Synthesegas keinen oder nur in Spuren enthaltenen Schwefelwasserstoff (H₂S) oder kein oder nur in Spuren vorhandenes Kohlendioxid (CO₂) auf.

In einem Beispiel weist das Synthesegas die Bestandteile Wasserstoff (H₂), Kohlenmonoxid (CO), Kohlendioxid (CO₂) und Schwefelwasserstoff (H₂S) auf, wobei Wasserstoff (H₂) und Kohlenmonoxid (CO) nicht zu entfernende Wertgase darstellen und Kohlendioxid (CO₂) und Schwefelwasserstoff (H₂S) zu entfernende saure Gasbestandteile darstellen. Ein Beispiel für ein solches Verfahren ist der Standard Rectisol-Prozess, in dem Methanol als Waschmittel Verwendung findet. In einem bevorzugten Beispiel werden die sauren Gasbestandteile Kohlendioxid (CO₂) und Schwefelwasserstoff (H₂S) im Rahmen des erfindungsgemäßen Verfahrens selektiv aus dem Synthesegas entfernt, das heißt als getrennte (Ab-)Gasströme aus dem Verfahren ausgeschleust. Ein Beispiel für ein solches Verfahren ist der selektive Rectisol-Prozess.

Eine bevorzugte Ausführungsform des erfindungsgemäßen Verfahrens ist dadurch gekennzeichnet, dass die sauren Gasbestandteile Schwefelwasserstoff (H₂S) und/oder Kohlendioxid (CO₂) umfassen. In bestimmten Ausgestaltungsformen des Verfahrens werden nur Schwefelwasserstoff (H₂S) oder Kohlendioxid (CO₂) aus dem Gasgemisch entfernt, jedoch nicht beide Komponenten.

Eine bevorzugte Ausführungsform des erfindungsgemäßen Verfahrens ist dadurch gekennzeichnet, dass in dem H₂S-haltigen Abgas enthaltenes Waschmittel auskondensiert wird, wobei das Waschmittel der Heißregenerierung zugeführt wird und das von Kondensat befreite H₂S-haltige Abgas einer Claus-Anlage zur Herstellung von Schwefel zugeführt wird.

Das bei der Heißregenerierung erhaltene H₂S-haltige Abgas enthält als weitere Komponente dampfförmiges Waschmittel, weswegen das Abgas zunächst einer Kondensationsvorrichtung zugeführt werden muss, bevor das Abgas einer Claus-Anlage zur Herstellung von Schwefel zugeführt werden kann. Bei der Kondensationsvorrichtung kann es sich dabei um einen Oberflächenkondensator handeln, beispielsweise einen Rohrbündelkondensator oder einen Plattenkondensator. Das auskondensierte Waschmittel wird in einen Sammelbehälter geleitet.

Eine bevorzugte Ausführungsform des erfindungsgemäßen Verfahrens ist dadurch gekennzeichnet, dass die Gaswäsche ein mindestens zweistufiges Gaswäscheverfahren mit einer Vorwäsche und einer Hauptwäsche umfasst, wobei das mit sauren Gasbestandteilen beladene Waschmittel aus einem Vorwäsche-Bereich der Waschkolonne abgezogen wird.

Dabei dient die Vorwäsche vornehmlich der Entfernung von Cyanwasserstoff (HCN) sowie weiterer Spurenbestandteile. Die Hauptwäsche dient vornehmlich der Entfernung von Schwefelwasserstoff (H₂S) sowie Kohlendioxid (CO₂). Die Hauptwäsche kann wiederum mehrere Wäschen umfassen, wobei beispielsweise eine erste Hauptwäsche der Entfernung von Schwefelwasserstoff und Kohlendioxid dient, und die zweite Hauptwäsche der Entfernung von Kohlendioxid dient. Vorzugsweise wird das mit sauren Gasbestandteilen beladene Waschmittel aus der Vorwäsche abgezogen, da dieses üblicherweise niedrig beladen ist und dadurch aufgrund wenig anfallender Absorptionswärme nur leicht über die ursprüngliche Temperatur erwärmt wurde. Es kann dadurch besonders effizient zur Kühlung von erwärmtem verdichteten Recycle-Gas genutzt werden. In einem Beispiel wird das abgekühlte, verdichtete Recycle-Gas der Hauptwäsche zugeführt, das heißt zur Hauptwäsche zurückgeführt.

Die Aufgabe der Erfindung wird ferner gelöst durch eine Vorrichtung zur Abtrennung von sauren Gasbestandteilen aus einem Gasgemisch, durch Gaswäsche mit einem physikalisch wirkenden Waschmittel, aufweisend folgende miteinander in Fluidverbindung bestehende Bestandteile:
Mindestens eine Regenerationsstufe des physikalisch wirkenden Waschmittels zur Desorption von im Waschmittel absorbierter Gase;
Mittel zum Abziehen eines bei der Regeneration des physikalisch wirkenden Waschmittels erhältlichen Recycle-Gases aus der Regenerationsstufe;
Mittel zum Zuführen des Recycle-Gases zu einem Verdichter;
eine Waschkolonne zur Absorption saurer Gasbestandteile aus dem Gasgemisch. Erfindungsgemäß ist vorgesehen, dass die Vorrichtung Mittel zur indirekten Wärmeübertragung vom verdichteten Recycle-Gas auf ein aus der Waschkolonne abziehbaren, mit sauren Gasbestandteilen beladenen Waschmittel aufweist, wodurch Wärme vom verdichteten Recycle-Gas auf das, beladene Waschmittel übertragbar ist.

Die Aufgabe der Erfindung wird ferner gelöst durch die Verwendung des erfindungsgemäßen Verfahrens oder der erfindungsgemäßen Vorrichtung in einem Gaswäscheverfahren mit Methanol als Waschmittel zur Abtrennung von Schwefelwasserstoff (H₂S) und/oder Kohlendioxid (CO₂) aus einem wenigstens die Bestandteile Wasserstoff (H₂), Kohlenmonoxid (CO), Schwefelwasserstoff (H₂S) und Kohlendioxid (CO₂) sowie optional Carbonylsulfid (COS) und Cyanwasserstoff (HCN) aufweisenden Roh-Synthesegases. \

Ein Beispiel für eine solche Verwendung ist der Standard Rectisol-Prozess, in dem Methanol als Waschmittel Verwendung findet. In einem bevorzugten Beispiel werden die sauren Gasbestandteile Kohlendioxid (CO₂) und Schwefelwasserstoff (H₂S) im Rahmen der erfindungsgemäßen Verwendung selektiv aus dem Synthesegas entfernt, das heißt als getrennte (Ab-)Gasströme bei der Verwendung des Verfahren oder der Vorrichtung ausgeschleust. Ein Beispiel für eine solche Verwendung ist der selektive Rectisol-Prozess.

### Ausführungs- und Zahlenbeispiele

Die Erfindung wird im Folgenden durch Beispiele näher erläutert, ohne den Gegenstand der Erfindung zu beschränken. Weitere Merkmale, Vorteile und Anwendungsmöglichkeiten der Erfindung ergeben sich aus der nachfolgenden Beschreibung der Ausführungsbeispiele in Zusammenhang mit den Zeichnungen und einem Zahlenbeispiel.

Es zeigt
- Figur 1: eine schematische Darstellung einer ersten beispielhaften Ausgestaltung des erfindungsgemäßen Verfahrens beziehungsweise der erfindungsgemäßen Vorrichtung,
- Figur 2: eine schematische Darstellung einer zweiten beispielhaften Ausgestaltung des erfindungsgemäßen Verfahrens beziehungsweise der erfindungsgemäßen Vorrichtung,
- Figur 3: eine schematische Darstellung einer dritten beispielhaften Ausgestaltung des erfindungsgemäßen Verfahrens beziehungsweise der erfindungsge-, mäßen Vorrichtung, und
- Figur 4: eine schematische Darstellung einer vierten beispielhaften Ausgestaltung des erfindungsgemäßen Verfahrens beziehungsweise der erfindungsgemäßen Vorrichtung.

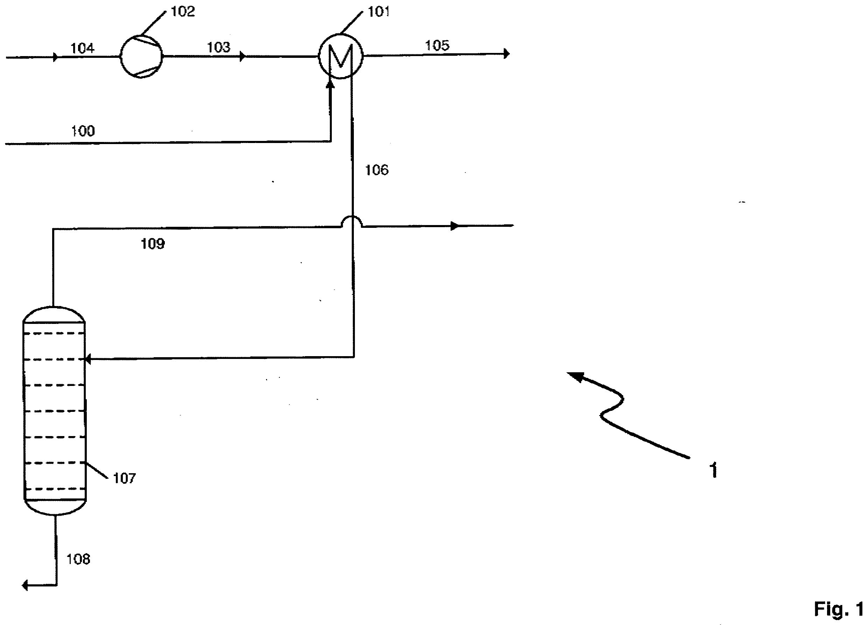

Fig. 1 zeigt schematisch einen Verfahrensablauf 1 beziehungsweise eine Vorrichtung 1 zur Verwendung innerhalb einer Anlage zur Gaswäsche von Rohsynthesegasen mit Methanol als Waschmittel gemäß einem ersten Ausführungsbeispiel der Erfindung.

Über die Leitung 100 wird aus einer Waschkolonne (nicht gezeigt) abgezogenes, mit sauren Gasbestandteilen beladenes Methanol einem Wärmetauscher 101 zugeführt. Gleichzeitig wird dem Wärmetauscher 101 aus einer oder mehreren Regenerationsstufen des Gaswäscheverfahrens verdichtetes Recycle-Gas über Leitung 103 zugeführt, das in einem vorigen Schritt einem Verdichter 102 über Leitung 104 zugeführt und im Verdichter 102 auf circa 40 bar verdichtet wurde. Das beladene Methanol und die Recycle-Gase werden im Wärmetauscher 101 im Kreuzgegenstrom geführt. Im Wärmetauscher 101, der zur Vermeidung von Wärmeverlusten unmittelbar stromabwärts des Verdichters 102 angeordnet ist, findet eine Übertragung von Wärme vom verdichteten Recycle-Gas auf das tiefkalt aus der Waschkolonne abgezogene Methanol statt, wobei das Methanol erwärmt und die auf 40 bar verdichteten Recycle-Gase abgekühlt werden. Die abgekühlten Recycle-Gase werden über Leitung 105 abgezogen und zur Waschkolonne zur Wiederverwertung zurückgeführt (nicht gezeigt). Im Wärmetauscher 101 erwärmtes Methanol verlässt diesen über Leitung 106 und wird direkt einer Kolonne 107 zugeführt, in der das erwärmte und mit sauren Gasbestandteilen beladene Methanol mit Eigendampf heiß regeneriert wird. Das heiß regenerierte, von sauren Gasbestandteilen weitgehend befreite Methanol wird über Leitung 108 aus einem unteren Bereich der Kolonne 107 abgezogen und anschließend zur Waschkolonne (nicht gezeigt) zur erneuten Absorption von sauren Gasbestandteilen aus Rohsynthesegas zurückgeführt. Am Kopf der Kolonne 107 werden über Leitung 109 die bei der Heißregenerierung desorbierten Gase, hauptsächlich Schwefelwasserstoff (H₂S) und dampfförmiges Methanol, abgezogen. Das dampfförmige Methanol wird in einem mehrstufigen Verfahren aus der Mischung auskondensiert und zur Kolonne 107 zurückgeführt (nicht gezeigt). Der dabei von Methanol-Dampf befreite, gewonnene Schwefelwasserstoff (H₂S) wird einer Claus-Anlage zur Herstellung von Schwefel zugeführt (nicht gezeigt).

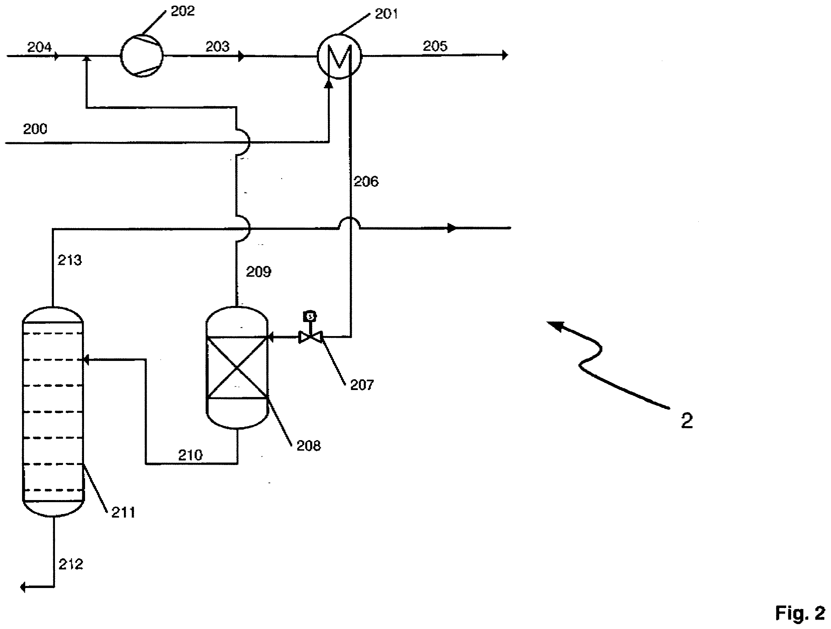

Fig. 2 zeigt schematisch einen Verfahrensablauf 2 beziehungsweise eine Vorrichtung 2 zur Verwendung innerhalb einer Anlage zur Gaswäsche von Rohsynthesegasen mit Methanol als Waschmittel gemäß einem zweiten Ausführungsbeispiel der Erfindung. Das Verfahren beziehungsweise die Vorrichtung gemäß Figur 2 unterscheidet sich vom Verfahren beziehungsweise der Vorrichtung gemäß Figur 1 darin, dass das durch den stromabwärts des Verdichters angeordneten Wärmetauscher aufgewärmte Methanol zunächst einer Entspannungsregenerierung (Druckentspannung) zugeführt wird, bevor es in eine Kolonne zur Heißregenerierung eintritt.

Hierbei wird über die Leitung 200 aus einer Waschkolonne (nicht gezeigt) abgezogenes, mit sauren Gasbestandteilen beladenes Methanol einem Wärmetauscher 201 zugeführt. Gleichzeitig wird dem Wärmetauscher 201 aus einer oder mehreren Regenerationsstufen des Gaswäscheverfahrens verdichtetes Recycle-Gas über Leitung 203 zugeführt, das in einem vorigen Schritt einem Verdichter 202 über Leitung 204 zugeführt und im Verdichter 202,auf circa 40 bar verdichtet wurde. Im Wärmetauscher 201, der zur Vermeidung von Wärmeverlusten unmittelbar stromabwärts des Verdichters 202 angeordnet ist, findet eine Übertragung von Wärme vom verdichteten Recycle-Gas auf das tiefkalt aus der Waschkolonne abgezogene Methanol statt, wobei das Methanol erwärmt und die auf 40 bar verdichteten Recycle-Gase abgekühlt werden. Die abgekühlten Recycle-Gase werden über Leitung 205 abgezogen und der Waschkolonne zur Wiederverwertung zurückgeführt (nicht gezeigt). Im Wärmetauscher 201 erwärmtes Methanol verlässt diesen über Leitung 206 und wird über das Entspannungsventil 207 zunächst einer Entspannungsregenerierung (Druckentspannung) in der Flash-Kolonne 208 zugeführt. Bei der Entspannungsregenerierung wird ein auch Wertgase wie Kohlenmonoxid (CO) und Wasserstoff (H₂) aufweisendes Entspannungsgas freigesetzt, das als Recycle-Gas über die Leitung 209 dem Verdichter 202 zur Rückverdichtung zugeführt wird. Dabei wird der Recycle-Gas Strom mit dem Recycle-Gas Strom aus weiteren Regenerierungsstufen in Leitung 204 zusammengeführt. Das aus einem unteren Bereich der Flash-Kolonne 208 abgezogene, teilweise regenerierte Methanol wird über Leitung 210 einer Kolonne 211 zugeführt, in der das erwärmte und mit sauren Gasbestandteilen beladene Methanol heißregeneriert wird. Das heiß regenerierte, von sauren Gasbestandteilen weitgehend befreite Methanol wird über Leitung 212 aus einem unteren Bereich der Kolonne 211 abgezogen und anschließend zur Waschkolonne (nicht gezeigt) zur erneuten Absorption von sauren Gasbestandteilen aus Rohsynthesegas zurückgeführt. Am Kopf der Kolonne 211 werden über Leitung 213 die bei der Heißregenerierung desorbierten Gase, hauptsächlich Schwefelwasserstoff (H₂S) und dampfförmiges Methanol, abgezogen. Das dampfförmige Methanol wird in einem mehrstufigen Verfahren aus der Mischung auskondensiert und zur Kolonne 211 zurückgeführt (nicht gezeigt). Der dabei von Methanol-Dampf befreite, gewonnene Schwefelwasserstoff (H₂S) wird einer Claus-Anlage zur Herstellung von Schwefel zugeführt (nicht gezeigt).

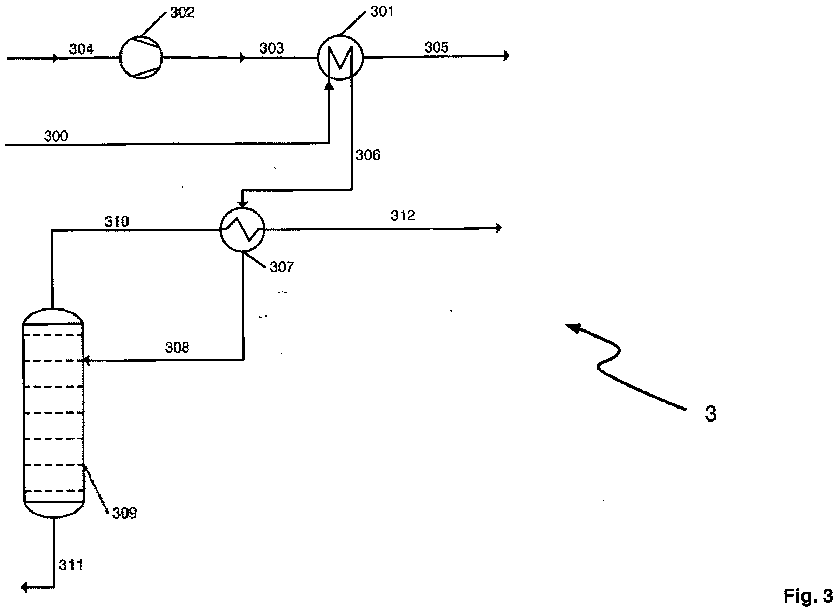

Fig. 3 zeigt schematisch einen Verfahrensablauf 3 beziehungsweise eine Vorrichtung 3 zur Verwendung innerhalb einer Anlage zur Gaswäsche von Rohsynthesegasen mit Methanol als Waschmittel gemäß einem dritten Ausführungsbeispiel der Erfindung. Das Verfahren beziehungsweise die Vorrichtung gemäß Figur 3 unterscheidet sich vom Verfahren beziehungsweise der Vorrichtung gemäß Figur 1 darin, dass das durch den stromabwärts des Verdichters angeordneten Wärmetauscher aufgewärmte Methanol durch einen weiteren Wärmetauscher aufgewärmt wird, bevor es der Heißregenerierung zugeführt wird.

Über die Leitung 300 wird aus einer Waschkolonne (nicht gezeigt) abgezogenes, mit sauren Gasbestandteilen beladenes Methanol einem Wärmetauscher 301 zugeführt. Gleichzeitig wird dem Wärmetauscher 301 aus einer oder mehreren Regenerationsstufen des Gaswäscheverfahrens verdichtetes Recycle-Gas über Leitung 303 zugeführt, das in einem vorigen Schritt einem Verdichter 302 über Leitung 304 zugeführt und im Verdichter 302 auf circa 40 bar verdichtet wurde. Im Wärmetauscher 301, der zur Vermeidung, von Wärmeverlusten unmittelbar stromabwärts des Verdichters 302 angeordnet ist, findet eine Übertragung von Wärme vom verdichteten Recycle-Gas auf das tiefkalt aus der Waschkolonne abgezogene Methanol statt, wobei das Methanol erwärmt und die auf 40 bar verdichteten Recycle-Gase abgekühlt werden. Die abgekühlten Recycle-Gase werden über Leitung 305 abgezogen und der Waschkolonne zur Wiederverwertung zurückgeführt (nicht gezeigt). Im Wärmetauscher 301 erwärmtes Methanol verlässt diesen über Leitung 306 und wird einem weiteren Wärmetauscher 307 aufgewärmt, bevor es über Leitung 308 einer Kolonne 309 zur Heißregenerierung zugeführt wird. Das bei der Heißregenerierung entstehende, am Kopf der Kolonne 309 abgezogene und über Leitung 310 abgeführte Gasgemisch, das hauptsächlich Schwefelwasserstoff und Methanol-Dampf enthält, tritt über Leitung 310 in den Wärmetauscher 307 ein. Dort wird das heiße Gasgemisch genutzt, um das bereits im Wärmetauscher 307 erwärmte Methanol weiter aufzuheizen, bevor es über Leitung 308 in Kolonne 309 zur Heißregenerierung eintritt. Das heiß regenerierte, von sauren Gasbestandteilen weitgehend befreite Methanol wird über Leitung 311 aus einem unteren Bereich der Kolonne 309 abgezogen und anschließend zur Waschkolonne (nicht gezeigt) zur erneuten Absorption von sauren Gasbestandteilen aus dem Rohsynthesegas zurückgeführt. Die am Kopf der Kolonne 309 über Leitung 310 abgezogenen, bei der Heißregenerierung desorbierten Gase werden nach Austritt aus dem Wärmetauscher 307 über die Leitung 312 einem mehrstufigen Verfahren zum Auskondensieren von Methanol aus dem Gasgemisch unterzogen. Das dabei gewonnene (flüssige) Methanol wird anschließend zur Kolonne 309 zurückgeführt (nicht gezeigt). Der vom Methanol-Dampf befreite, gewonnene Schwefelwasserstoff (H₂S) wird einer Claus-Anlage zur Herstellung von Schwefel zugeführt (nicht gezeigt).

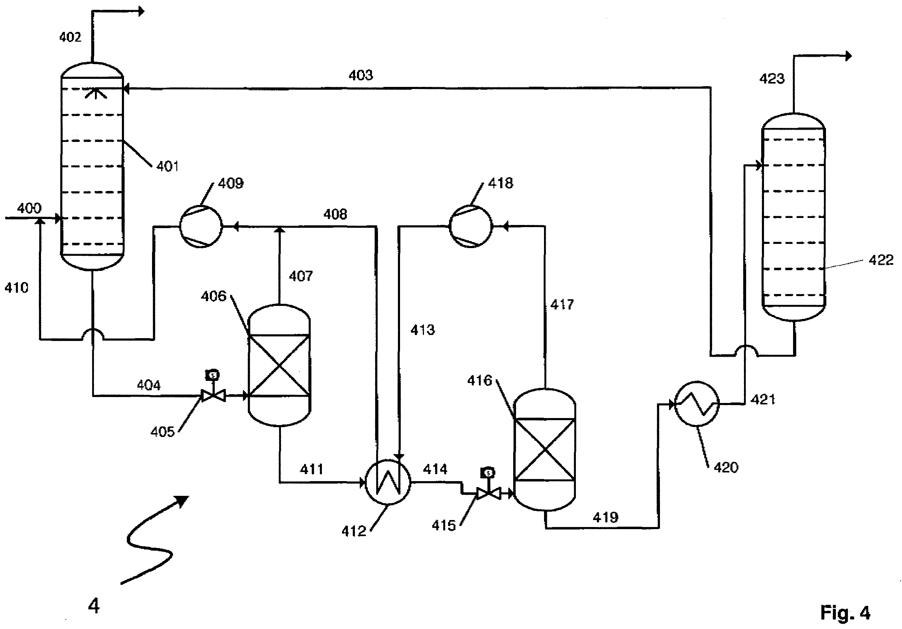

Fig. 4 zeigt schematisch einen Verfahrensablauf 4 beziehungsweise eine Vorrichtung 4 zur Verwendung innerhalb einer Anlage zur Gaswäsche von Rohsynthesegasen mit Methanol als Waschmittel gemäß einem vierten Ausführungsbeispiel der Erfindung. Das Verfahren beziehungsweise die Vorrichtung gemäß Figur 4 unterscheidet sich vom Verfahren beziehungsweise der Vorrichtung gemäß Figur 1 darin, dass das aus der Waschkolonne abgezogene, mit sauren Gasbestandteilen beladene Methanol zunächst einer Entspannungsregenerierung zugeführt wird, bevor es zum Abkühlen der komprimierten Recycle-Gase verwendet wird, nach dem Abkühlen der verdichteten Recycle-Gase einer weiteren Entspannungsregenerierung unterzogen wird und ferner dadurch, dass der Verdichter mehrere hintereinander angeordnete Verdichtungsstufen aufweist.

Über die Leitung 400 wird einer Waschkolonne 401 - hier einer Absorptionskolonne mit Ventilböden - ein Rohsynthesegas mit einem Druck von circa 40 bar zugeführt. In der Waschkolonne 401 durchströmt das Rohsynthesegas nach oben die Zwischenräume der mit Methanol benetzten Ventilböden. Regeneriertes Methanol wird am Kopf der Kolonne 401 über Leitung 403 zugeführt und durchströmt die Rieselkörper der Kolonne 401 von oben nach unten, wobei es aus dem Rohsynthesegas zumindest teilweise saure Gasbestandteile physikalisch absorbiert. Das zumindest teilweise von sauren Gasbestandteilen befreite Synthesegas tritt über die Leitung 402 am Kopf der Kolonne aus. Das mit sauren Gasbestandteilen beladene Methanol wird im Sumpfbereich der Kolonne 401 über die Leitung 404 abgezogen und über das Entspannungsventil 405 einer Flash-Kolonne 406 zur Entspannungsregenerierung (Druckentspannung) zugeführt. In der Flash-Kolonne 406 wird das mit sauren Gasbestandteilen beladene Methanol auf einen Druck von 12 bar entspannt. Die dabei desorbierten Recycle-Gase werden über Leitung 407 aus der Flash-Kolonne 406 abgezogen, mit den Recycle-Gasen in Leitung 408 zusammengeführt und in der Verdichterstufe 409 von 12 bar auf 40 bar verdichtet. Die rückverdichteten Recycle-Gase aus Verdichterstufe 409 werden anschließend über Leitung 410 mit dem Rohsynthesegas aus Leitung 400 zur erneuten Absorption in der Waschkolonne 401 zusammengeführt. Das am Sumpf der Flash-Kolonne 406 abgezogene, teilregenerierte Methanol wird über Leitung 411 dem Wärmetauscher 412 zugeführt, in Wärmetauscher 412 findet eine indirekte Übertragung von Wärme von teilregenerierten Methanol auf 12 bar verdichtete Recycle-Gase aus Leitung 413 statt. Dabei werden die verdichteten Recycle-Gase gekühlt und das teilregenerierte Methanol gleichzeitig erwärmt. Das unter einem Druck von 12 bar stehende teilregenerierte und erwärmte Methanol verlässt den Wärmetauscher 412 über Leitung 414 und wird durch Entspannungsventil 415 auf 6 bar entspannt und dadurch der Flash-Kolonne 416 zu einer weiteren Entspannungsregenerierung (Druckentspannung) zugeführt. Die dabei anfallenden Recycle-Gase werden über Leitung 417 abgezogen und Verdichterstufe 418 zugeführt, in der die Recycle-Gase von 6 bar auf 12 bar verdichtet und dem Wärmetauscher 412 zum Abkühlen zugeführt werden. Der Wärmetauscher 412 ist unmittelbar stromabwärts der Verdichterstufe 418 angeordnet. Aus dem Sumpf der Flash-Kolonne 416 wird über Leitung 419 auf 6 bar entspanntes, teilregeneriertes Methanol abgezogen, im Wärmetauscher 420 weiter aufgeheizt und schließlich über Leitung 421 Kolonne 422 zugeführt, in der das teilregenerierte Methanol einer Heißregenerierung zugeführt wird. Das heißregenerierte, aus Leitung 403 abgezogene Methanol wird zur Waschkolonne 401 zur Absorption saurer Gasbestandteile aus dem Rohsynthesegas und Recycle-Gasen zurückgeführt. Die am Kopf der Kolonne 422 über Leitung 423 abgezogenen, bei der Heißregenerierung desorbierten Gase werden einem mehrstufigen Verfahren zum Auskondensieren von Methanol aus dem Gasgemischung unterzogen. Das dabei gewonnene (flüssige) Methanol wird anschließend zur Kolonne 422 zurückgeführt (nicht gezeigt). Der vom Methanol-Dampf befreite, gewonnene Schwefelwasserstoff (H₂S) wird einer Claus-Anlage zur Herstellung von Schwefel zugeführt (nicht gezeigt). Das bei der Heißregenerierung in Leitung 423 abgezogene, heiße Gasgemisch kann auch gemäß einer weiteren Ausführungsform, zum Aufheizen des in Leitung 419 abgezogenen, teilregenerierten Methanol in Wärmetauscher 420 genutzt werden.

Im folgenden Vergleichsbeispiel sollen die Vorteile der Erfindung weiter verdeutlicht werden. Die folgende Tabelle zeigt eine beispielhafte Berechnung der Kosten für eine Anlage zur Behandlung von Rohsynthesegasen mit Methanol als Waschmittel gemäß einem erfindungsgemäßem Beispiel und einem Vergleichsbeispiel. Im erfindungsgemäßen Beispiel wird die Kühlung der verdichteten Recycle-Gase zumindest teilweise durch ein aus einer Waschkolonne abgezogenes, mit sauren Gasbestandteilen beladenem Waschmittel - in diesem Fall Methanol - realisiert. Im Vergleichsbeispiel erfolgt die Kühlung mit Hilfe eines separaten Kühlwasser-Kreislaufs.

Die Berechnung basiert auf den Annahmen einer Rohsynthesegas-Kapazität von 920.000 Nm³/hr (Normkubikmeter pro Stunde) bei einem Rohsynthesegas-Druck von 36 barG (bar gauge) und einer Anlagenlaufzeit von 8000 hr/a (Stunden pro Jahr),

| **Betriebsmittel** | **Einheit** | **Vergleichsbeispiel** | **Beispiel (Erfindung)** | **Differenz Vergleichsbeispiel/ Beispiel** | **Einsparung in Prozent (%)** |
|---|---|---|---|---|---|
| Kühlwasser | kg/hr | 1565228 | 1542826 | 22402 | 1,4 |
| Elektrizität | kW | 4683 | 4586 | 97 | 2,1 |
| Dampf (Niederdruck) | kg/hr | 26727 | 26727 | 0 | 0 |
| Dampf (Mitteldruck) | kg/hr | 12730 | 12730 | 0 | 0 |
| Kühlung | kW | 10327 | 10351 | -25 | -0,2 |

Die Tabelle verdeutlicht die möglichen Einsparungen in Bezug auf aufzuwendendes Kühlwasser und Elektrizität (geringere elektrische Leistung zur Verdichtung). Die etwas höheren Aufwendungen bei der Kühlung werden durch die Effekte der Erfindung (Einsparung bei Kühlwasser und Elektrizität) im Hinblick auf die Betriebskosten deutlich überkompensiert.

Es sei angemerkt, dass Ausführungsformen der Erfindung unter Bezugnahme auf verschiedene Arten von Gegenständen beschrieben werden. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination zwischen Merkmalen in Bezug auf verschiede Arten von Gegenständen oder Anspruchstypen in Betracht gezogen werden kann. Alle Merkmale können kombiniert werden um synergetische Effekte zu erzielen, welche über die einfache Summierung der technischen Merkmale hinausgehen.

Während die Erfindung im Detail in den Zeichnungen und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnungen, der Offenbarung und der abhängigen Ansprüche verstanden und ausgeführt werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 1, 2, 3,4: Erfindungsgemäßes Verfahren oder Vorrichtung
- 100: Leitung
- 101: Wärmetauscher
- 102: Verdichter
- 103: Leitung
- 104: Leitung
- 105: Leitung
- 106: Leitung
- 107: Kolonne
- 108: Leitung
- 109: Leitung
- 200: Leitung
- 201: Wärmetauscher
- 202: Verdichter
- 203: Leitung
- 204: Leitung
- 205: Leitung
- 206: Leitung
- 207: Entspannungsventil
- 208: Flash-Kolonne
- 209: Leitung
- 210: Leitung
- 211: Kolonne
- 212: Leitung
- 213: Leitung
- 300: Leitung
- 301: Wärmetauscher
- 302: Verdichter
- 303: Leitung
- 304: Leitung
- 305: Leitung
- 306: Leitung
- 307: Wärmetauscher
- 308: Leitung
- 309: Kolonne
- 310: Leitung
- 311: Leitung
- 312: Leitung
- 400: Leitung
- 401: Waschkolonne
- 402: Leitung
- 403: Leitung
- 404: Leitung
- 405: Entspannungsventil
- 406: Flash-Kolonne
- 407: Leitung
- 408: Leitung
- 409: Verdichterstufe
- 410: Leitung
- 411: Leitung
- 412: Wärmetauscher
- 413: Leitung
- 414: Leitung
- 415: Entspannungsventil
- 416: Flash-Kolonne
- 417: Leitung
- 418: Verdichterstufe
- 419: Leitung
- 420: Wärmetauscher
- 421: Leitung
- 422: Kolonne
- 423: Leitung

## Patentansprüche

1. Verfahren zur Abtrennung von sauren Gasbestandteilen aus einem Gasgemisch,
durch Gaswäsche mit einem physikalisch wirkenden Waschmittel,
bei dem ein aus mindestens einer Regenerationsstufe des physikalisch wirkenden Waschmittels abgezogenes Recycle-Gas einem Verdichter zugeführt wird, wodurch ein erwärmtes verdichtetes Recycle-Gas erhalten wird,
**dadurch gekennzeichnet, dass**
ein aus einer Waschkolonne abgezogenes, mit sauren Gasbestandteilen beladenes Waschmittel in indirekten Kontakt mit dem erwärmten verdichteten Recycle-Gas gebracht wird, wobei eine Übertragung von Wärme von dem erwärmten verdichteten Recycle-Gas auf das beladene Waschmittel stattfindet, wodurch das erwärmte verdichtete Recycle-Gas abgekühlt wird und das beladene Waschmittel erwärmt wird, wodurch ein abgekühltes verdichtetes Recycle-Gas und ein erwärmtes beladenes Waschmittel erhalten werden.

2. Verfahren nach Anspruch 1, **dadurch gekennzeichnet, dass** das erwärmte beladene Waschmittel einer Heißregenerierung zugeführt wird, wobei bei der Heißregenerierung ein H₂S-haltiges Abgas und ein heißregeneriertes Waschmittel erhalten werden.

3. Verfahren nach Anspruch 1, **dadurch gekennzeichnet, dass** das erwärmte beladene Waschmittel einer Entspannungsregenerierung zugeführt wird, wobei durch die Entspannungsregenerierung ein entspannungsregeneriertes Waschmittel und ein Entspannungsgas erhalten werden, wobei das Entspannungsgas dem Verdichter zugeführt wird und das entspannungsregenerierte Waschmittel einer Heißregenerierung zugeführt wird, wobei bei der Heißregenerierung ein H₂S-haltiges Abgas und ein heißregeneriertes Waschmittel erhalten werden.

4. Verfahren nach einem der vorherigen Ansprüche, **dadurch gekennzeichnet, dass** das beladene Waschmittel ausschließlich durch das erwärmte verdichtete Recycle-Gas erwärmt wird.

5. Verfahren nach einem der Ansprüche 2 oder 3, **dadurch gekennzeichnet, dass** das beladene Waschmittel durch das erwärmte verdichtete Recycle-Gas erwärmt wird und durch das H₂S-haltige Abgas erwärmt wird.

6. Verfahren nach einem der vorherigen Ansprüche, **dadurch gekennzeichnet, dass** das beladene Waschmittel einer Entspannungsregenerierung zugeführt wird, bevor es in indirekten Kontakt mit dem erwärmten und verdichteten Recycle-Gas gebracht wird.

7. Verfahren nach einem der vorherigen Ansprüche, **dadurch gekennzeichnet, dass** die Übertragung der Wärme vom erwärmten verdichteten Recycle-Gas auf das beladene Waschmittel stromabwärts des Verdichters stattfindet.

8. Verfahren nach einem der vorherigen Ansprüche, **dadurch gekennzeichnet, dass** der Verdichter mehrere hintereinander angeordnete Verdichtungsstufen aufweist.

9. Verfahren nach Anspruch 8, **dadurch gekennzeichnet, dass** die Übertragung der Wärme vom erwärmten verdichteten Recycle-Gas auf das beladene Waschmittel zwischen zwei der Verdichtungsstufen stattfindet.

10. Verfahren nach einem der vorherigen Ansprüche, **dadurch gekennzeichnet, dass** die Übertragung der Wärme in einem Wärmetauscher stattfindet.

11. Verfahren nach einem der vorherigen Ansprüche, **dadurch gekennzeichnet, dass** die mindestens eine Regenerationsstufe ausgewählt ist aus der Gruppe aufweisend Entspannungsregenerierung (flashen), Strippen und Heißregenerierung.

12. Verfahren nach einem der vorherigen Ansprüche, **dadurch gekennzeichnet, dass** die mindestens eine Regenerationsstufe eine Entspannungsregenerierung (flashen) umfasst, wobei die Entspannungsregenerierung ausgewählt ist aus der Gruppe umfassend Hochdruck-, Mitteldruck- und Niederdruck-Entspannungsregenerierung.

13. Verfahren nach einem der vorherigen Ansprüche, **dadurch gekennzeichnet, dass** das Waschmittel ausgewählt ist aus wenigstens einem Element der Gruppe umfassend Methanol, 1-Methyl-2-pyrrolidon (NMP), eine Mischung von Dimethylethem von Polyethylenglycol, und Propylencatbonat (4-Methyl-1,3-dioxolan-2-on).

14. Verfahren nach einem der vorherigen Ansprüche, **dadurch gekennzeichnet, dass** das Gasgemisch ein Synthesegas umfasst, wobei das Synthesegas als Bestandteile Wasserstoff (H₂), Kohlenmonoxid (CO), Kohlendioxid (CO₂), Schwefelwasserstoff (H₂S) und optional Carbonylsulfid (COS) umfasst.

15. Verfahren nach einem der vorherigen Ansprüche, **dadurch gekennzeichnet, dass** die sauren Gasbestandteile Schwefelwasserstoff (H₂S) und optional Kohlendioxid (CO₂) umfassen.

16. Verfahren nach einem der Ansprüche 2 bis 15, **dadurch gekennzeichnet, dass** in dem H₂S-haltigen Abgas enthaltenes Waschmittel auskondensiert wird, wobei das Waschmittel der Heißregenerierung zugeführt wird und das von Kondensat befreite H₂S-haltige Abgas einer Claus-Anlage zur Herstellung von Schwefel zugeführt wird.

17. Verfahren nach einem der Ansprüche 1 bis 16, **dadurch gekennzeichnet, dass** die Gaswäsche ein mindestens zweistufiges Gaswäscheverfahren mit einer Vorwäsche und einer Hauptwäsche umfasst, wobei das mit sauren Gasbestandteilen beladene Waschmittel aus einem Vorwäsche-Bereich der Waschkolonne abgezogen wird.

18. Vorrichtung zur Abtrennung von sauren Gasbestandteilen aus einem Gasgemisch, durch Gaswäsche mit einem physikalisch wirkenden Waschmittel, aufweisend folgende miteinander in Fluidverbindung bestehende Bestandteile:
Mindestens eine Regenerationsstufe des physikalisch wirkenden Waschmittels zur Desorption von im Waschmittel absorbierter Gase;
Mittel zum Abziehen eines bei der Regeneration des physikalisch wirkenden Waschmittels erhältlichen Recycle-Gases aus der Regenerationsstufe;
Mittel zum Zuführen des Recycle-Gases zu einem Verdichter;
eine Waschkolonne zur Absorption saurer Gasbestandteile aus dem Gasgemisch,
**dadurch gekennzeichnet, dass**
die Vorrichtung Mittel zur indirekten Wärmeübertragung vom verdichteten Recycle-Gas auf ein aus der Waschkolonne abziehbares, mit sauren Gasbestandteilen beladenes Waschmittel aufweist, wodurch Wärme vom verdichteten Recycle-Gas auf das beladene Waschmittel übertragbar ist.

19. Verwendung des Verfahrens nach einem der Ansprüche 1 bis 17 oder der Vorrichtung nach Anspruch 18 in einem Gaswäscheverfahren mit Methanol als Waschmittel zur Abtrennung von Schwefelwasserstoff (H₂S) und/oder Kohlendioxid (CO₂) aus einem wenigstens die Bestandteile Wasserstoff (H₂), Kohlenmonoxid (CO), Schwefelwasserstoff (H₂S), Kohlendioxid (CO₂) und optional wenigstens ein Element aus der Gruppe Carbonylsulfid (COS), Cyanwasserstoff (HCN), und Thiole (Mercaptane) aufweisenden Roh-Synthesegas.
